Europäisches Patentamt

(19) European Patent Office

Office européen des brevets

(11) Veröffentlichungsnummer: **0 102 436**
**B1**

(12) **EUROPÄISCHE PATENTSCHRIFT**

(45) Veröffentlichungstag der Patentschrift:
14.01.87

(21) Anmeldenummer: **82810367.1**

(22) Anmeldetag: **03.09.82**

(51) Int. Cl.⁴: **C 02 F 3/02**, C 02 F 11/02, A 23 K 1/00

(54) Verfahren zur Behandlung von organischen Abprodukten unter Abtrennung von Schadstoffen.

(43) Veröffentlichungstag der Anmeldung:
14.03.84 Patentblatt 84/11

(45) Bekanntmachung des Hinweises auf die Patenterteilung:
14.01.87 Patentblatt 87/3

(84) Benannte Vertragsstaaten:
AT BE CH DE FR GB IT LI NL SE

(56) Entgegenhaltungen:
EP-A-0 018 348
EP-A-0 038 489
DE-A-2 042 571

(73) Patentinhaber: BRV TECHNOLOGIE- SYSTEME AG,
Rheinstrasse 3, CH- 9470 Buchs SG (CH)

(72) Erfinder: Breuer, Hans, Schilfweg 4, CH- 2500 Biel
(CH)
Erfinder: Rindelaub, Frank, Allée du Bied 21, CH-
2015 Areuse (CH)
Erfinder: Velebil, Gerhard, Im Brühl 6, D-7846
Schliengen 5 (CH)

(74) Vertreter: Seehof, Michel, c/o AMMANN
PATENTANWAELTE AG BERN Schwarztorstrasse
31, CH- 3001 Bern (CH)

## Beschreibung

Die vorliegende Erfindung bezieht sich auf ein Verfahren zur Gewinnung von höherverwertbaren Stoffen aus organischen Abprodukten, wobei die Abprodukte einer Behandlung zum Aufschliessen der Zellen unterworfen und die freigelegten Schadstoffe abgeschieden werden und die von Schadstoffen freie Masse einer Behandlung zur Gewinnung von Wertstoffen unterzogen wird.

Ein solches Verfahren ist aus der EP-A-0 018 348 bekannt. Mit diesem Verfahren wird der Abfall, der ein Müll/Klärschlammgemisch oder zellulosehaltige oder vegetabile Stoffe sein kann, in einem Wirbelschichtreaktor mit einem gasförmigen Gemisch aus Chlorwasserstoff und Wasserdampf unter Druck und Hitze behandelt, um das Gut zu sterilisieren und hydrolysieren. Bei dieser Behandlung erfolgt ein Zellaufschluss, wonach das Entfernen von Metallionen erfolgt, die den nachfolgenden Fermentationsprozess der ganzen übrigbleibenden Masse stören würden. Das anfallende organische Produkt kann als Kraftfutter verwendet werden.

Aus der EP-A-0 038 489 ist ein Verfahren zur Gewinnung von proteinhaltigem Tierfutter aus in Wasser gelösten und/oder schwebenden organischen Stoffen bekannt, wonach die Stoffe biologisch aufbereitet und das Wachstum der Mikroorganismen fördernde Zusätze eingebracht werden. Dabei werden auch die Wände der Zellen zerstört, um die Verdaulichkeit des proteinhaltigen Endproduktes zu erhöhen.

Es ist demgegenüber Aufgabe der vorliegenden Erfindung ein Verfahren anzugeben, um aus organischen Abprodukten wie Abwasser, Klärschlamm, Flüssigmist oder auch Molke und Schlempe, höherverwertbare Stoffe, wie Aminosäuren, unschädliche Mineralsalze und lösliche organische Stoffe und vor allem Proteine zu erhalten, die keine Schadstoffe, insbesondere keine Schwermetalle mehr enthalten.

Diese Aufgabe wird durch das in den Ansprüchen beschriebene Verfahren gelöst.

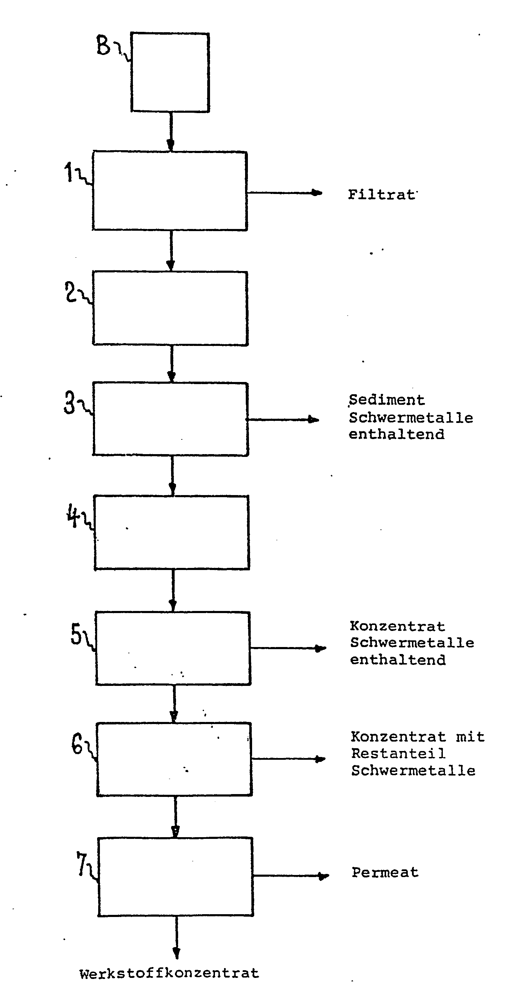

Die Erfindung wird im folgenden anhand eines Aufbereitungsschemas, das die einzige Figur darstellt und anhand von Ausführungsbeispielen, näher erläutert werden.

Im wesentlichen geht es beim erfindungsgemässen Verfahren, die in den Zellen der Mikroorganismen enthaltenen Wertstoffe und Schadstoffe freizulegen und zugängig zu machen, um dann die Schadstoffe, insbesondere Schwermetalle, abzutrennen und die befreiten Wertstoffe, insbesondere Proteine, für höher wertige Verwendungszwecke zu gewinnen.

Das Verfahren wird nun anhand des Schemas im Detail erläutert werden.

Die voreingedickte Biomasse, vorzugsweise aus einem Bio-Umlaufreaktor B, wie er in der gleichzeitig angemeldeten europäischen Patentanmeldung EP-A- 102 435 der gleichen Anmelderin beschrieben ist, gelangt zur Konzentrationsstufe 1, wo ihr Wasser entzogen wird. Dieses Wasser kann beispielsweise in die Kläranlage zur Weiterverwendung eingespeist werden. Diese Konzentration kann entweder durch statische Eindickung oder mechanische Konzentration mit oder ohne Flockungshilfsmittel oder mittels Zentrifugen, Separatoren und dergl. bekannten Mittel, erfolgen.

Die konzentrierte Biomasse gelangt in die Verfahrensstufe 2, in welcher die Zellen der Mikroorganismen aufgeschlossen werden, um deren Inhalt freizulegen. Dieser Aufschluss kann entweder durch chemisch-physikalische und thermische Behandlung, sowie durch mechanische Bearbeitung, beispielsweise Vermahlung oder Druckentspannung oder durch Ausfrieren und nachfolgender Schockbehandlung oder aber durch Enzymbehandlung erfolgen. Es ist auch möglich, eine Kombination von mehreren dieser angegebenen Verfahren anzuwenden.

Die aufgeschlossene und freigelegte Biomasse wird einer Zentrifugierstufe 3 zugeführt, in welcher die Feststoffe und ein überwiegender Teil der Schwermetalle abgetrennt werden. Diese Feststoffe können weiterverwendet werden, beispielsweise zur Energiegewinnung in einem Faulturm.

In der Stufe 4 wird die aus der Zentrifuge stammende Lösung auf einen geeigneten pH-Wert eingestellt, beispielsweise mittels Schwefelsäure.

Die auf den geeigneten pH-Wert eingestellte Lösung gelangt zur Stufe 5, in welcher sie einer Mikrofiltration unterworfen wird. Dabei werden geeignete Mikrofilterbatterien verwendet. Durch diese Mikrofiltration wird ein weiterer Anteil Schwermetalle abgeschieden, sowie feindisperse und kolloidale Feststoffe. Vorzugsweise werden Filter mit einer Porengrösse von 0,2 bis 1,0 µm verwendet.

Anschliessend gelangt die filtrierte Lösung in die Schwermetall-Abscheidungsstufe 6, in der durch geeignete Ionentauscher oder durch Fällung mit anschliessender Sedimentation die unerwünschten Schwermetallanteile entfernt werden. Die so erhaltene Lösung besteht im wesentlichen aus Aminosäuren, unschädlichen Mineralsalzen und löslichen organischen Stoffen.

In der anschliessenden Stufe 7 wird durch bekannte physikalische und chemisch-physikalische Verfahren, vorzugsweise Ultrafiltration, eine Aufkonzentration je nach Verwendungszweck durchgeführt.

## Patentansprüche

1. Verfahren zur Gewinnung von höherverwertbaren Stoffen aus organischen Abprodukten, wobei die Abprodukte einer Behandlung zum Aufschliessen der Zellen unterworfen und die freigelegten Schadstoffe abgeschieden werden und die von Schadstoffen freie Masse einer Behandlung zur Gewinnung von Wertstoffen unterzogen wird, dadurch gekennzeichnet, dass die organischen Abprodukte einer aeroben Vorbehandlung (B) und Voreindickung unterzogen werden und der voreingedickten Biomasse Wasser entzogen wird (1), die Zellen des Konzentrats aufgeschlossen werden (2), woraufhin die aufgeschlossene und freigelegte Biomasse zentrifugiert wird (3), um die Feststoffe und den überwiegenden Anteil an Schwermetallen abzutrennen, die übrigbleibende Lösung auf einen für die anschliessende Schwermetallabscheidung geeigneten pH-Wert eingestellt (4) und einer Mikrofiltration unterworfen wird (5), um weitere Schwermetallanteile und feindisperse und kolloidale Feststoffe abzuscheiden, woraufhin aus der filtrierten Lösung in einer Schwermetall-Abscheidungsstufe (6) der Rest Schwermetallanteile abgeschieden wird, um eine im wesentlichen aus Aminosäuren, unschädlichen Mineralsalzen und löslichen organischen Stoffen bestehende Lösung zu erhalten, die aufkonzentriert werden kann (7).

2. Verfahren nach Anspruch 1, dadurch gekennzeichnet, dass der Aufschluss der Zellen nach einem physikalischen, chemischen oder thermischen Verfahren oder einer Kombination dieser Verfahren durchgeführt wird.

3. Verfahren nach Anspruch 1, dadurch gekennzeichnet, dass der Aufschluss mittels eines enzymatischen Verfahrens durchgeführt wird.

4. Verfahren nach einem der Ansprüche 1 bis 3, dadurch gekennzeichnet, dass für die Mikrofiltration Fitter mit einer Porengrösse von 0,2 - 1,0 µm gewählt werden.

5. Verfahren nach Anspruch 4, dadurch gekennzeichnet, dass nach der Mikrofiltration die Schadstoffabtrennung durch ionenspezifisch wirkende Tauscher erfolgt.

6. Verfahren nach einem der Ansprüche 1 bis 5, dadurch gekennzeichnet, dass aus der von Schadstoffen freien Lösung Proteine, vorzugsweise durch Ultrafiltration, abgetrennt und aufkonzentriert werden.

## Claims

1. A process for obtaining valuable substances from organic fall out products, in which the fall out products are submitted to a treatment for desintegrating the cells, the noxious substances are separated and the mass free of noxious substances is submitted to a treatment for obtaining valuables substances, characterized in that the organic fall out products are submitted to an aerobic and concentrating pretreatment (B), water is abstracted from the preconcentrated biomass (1), the cells of the concentrate are desintegrated (2), then the desintegrated and liberated biomass is centrifugated (3) for separating the solid substances and the preponderant portion of heavy metals, the remaining solution is adjusted to a pH value (4) appropriated for the following separation of the heavy metals and submitted to a microfiltration (5) for separating other portions of heavy metals and of solid, fine dispersed and colloidal substances, then the rest of the portions of heavy metals from the filtered solution is separated in a step of separation of heavy metals (6) for obtaining a solution capable to be concentrated, formed essentially of amino-acids, non toxic mineral salts and organic soluble substances.

2. A process according to claim 1, characterized in that the desintegration of the cells is executed in accordance with a physical, chemical or thermal process, or a combination thereof.

3. A process according to claim 1, characterized in that the desintegration is executed by means of an enzymatic process.

4. A process according to one of the claims 1 to 3, characterized in that for the microfiltration, filters are choosen with a pore size of .2 - 1.0 µm.

5. A process according to claim 4, characterized in that the separation of the noxious substances is effected after the microfiltration by an ion exchanger.

6. A process according to one of the claims 1 to 5, characterized in that proteins are separated and concentrated preferably by ultrafiltration from the solution free of noxious substances.

## Revendications

1. Procédé pour l'obtention de substances utiles à partir de résidus organiques, dans lequel les résidus sont soumis à un traitement de désintégration des cellules, les substances nocives sont séparées et la masse libre de substances nocives est soumise à un traitement pour l'obtention de substances utiles, caractérisé en ce que les résidus organiques sont soumis à un prétraitement aérobique (B) et de préconcentration, l'eau est retirée de la biomasse préconcentrée (1), les cellules du concentré sont désintégrées (2), la biomasse désintégrée et libérée est ensuite centrifugée (3) pour séparer les substances solides et la partie prépondérante des métaux lourds, la solution restante est ajustée à une valeur de pH appropriée (4) pour la séparation suivante des métaux lourds et soumise à une microfiltration (5) pour séparer d'autres parties de métaux lourds et de substances soliées finement dispersées et colloidales, le reste des parties de métaux lourds de la solution filtrée est ensuite séparé dans une étape de séparation des métaux lourds (6) pour obtenir une solution susceptible d'être concentrée, formée pour l'essentiel d'acides aminés, de sels mineraux inoffensifs et de substances organiques solubles.

2. Procédé selon la revendication 1, caractérisé en ce que la désintégration des cellules est exécutée selon un procédé physique, chimique ou thermique, ou une combinaison de ces procédés.

3. Procédé selon la revendication 1, caractérisé en ce que la désintégration est exécutée à l'aide d'un procédé enzymatique.

4. Procédé selon l'une des revendications 1 à 3, caractérisé en ce que pour la microfiltration, des filtres sont choisis avec une grandeur de pores de 0,2-1,0 μm.

5. Procédé selon la revendication 4, caractérisé en ce que la séparation des substances nocives est effectuée après la microfiltration par un échangeur d'ions.

6. Procédé selon l'une des revendications 1 à 5, carctérisé en ce que des protéines sont séparées et concentrées de préférence par ultrafiltration à partir de la solution libre de substances nocives.

B

1 → Filtrat

2

3 → Sediment
Schwermetalle
enthaltend

4

5 → Konzentrat
Schwermetalle
enthaltend

6 → Konzentrat mit
Restanteil
Schwermetalle

7 → Permeat

Werkstoffkonzentrat